# EUROPÄISCHE PATENTSCHRIFT

(11) **EP 3 231 998 B1**
(45) Veröffentlichungstag und Bekanntmachung des Hinweises auf die Patenterteilung: **17.05.2023**
(21) Anmeldenummer: 17165615.0
(22) Anmeldetag: 07.04.2017
(51) Int. Cl.: F01D 5/16, F01D 5/26, F01D 25/06

(54) **LEITSCHAUFELSEGMENT**
GUIDE VANE SEGMENT
SEGMENT D'UNE AUBE STATORIQUE

(30) Priorität: 11.04.2016 DE 102016205995
(43) Veröffentlichungstag der Anmeldung: 18.10.2017
(73) Patentinhaber: MTU Aero Engines AG, 80995 München (DE)
(72) Erfinder: Schlemmer, Markus, 84048 Mainburg / Sandelzhausen (DE); Hartung, Andreas, 81829 München (DE); Richter, Karl-Hermann, 85229 Markt Indersdorf (DE); Hanrieder, Herbert, 85411 Hohenkammer (DE)

(56) Entgegenhaltungen:
- WO-A1-2012/095067
- DE-A1-102009 010 185
- US-A1- 2014 348 657

## Beschreibung

Die Arbeiten, die zu dieser Erfindung geführt haben, wurden gemäß der *Finanzhilfevereinbarung* Nr. CSJU-GAM-SAGE-2008-001 im Zuge des Siebten Rahmenprogramms der Europäischen Union (*FP7*/*2007-2013*) für Clean Sky Joint Technology Initiative gefördert.

Die vorliegende Erfindung betrifft ein Leitschaufelsegment für eine Turbomaschinenstufe, eine Turbomaschinenstufe, insbesondere Verdichter- oder Turbinenstufe, mit dem Leitschaufelsegment sowie eine Turbomaschine, insbesondere Gasturbine, mit der Turbomaschinenstufe.

Aus der eigenen WO 2012/095067 A1 ist es bekannt, an Leitschaufeln einer Gasturbine Impulskörper anzuordnen, die zum Stoßkontakt mit der Schaufeln vorgesehen sind. Aus der eigenen US 2014/0348657 A1 ist es bekannt, einen Impulskörper in der axialen Mitte eines Leitschaufelsegments anzuordnen.

Hierdurch kann ein neuartiges Konzept der Anmelderin zur Reduzierung von unerwünschten Schwingungen realisiert werden, welches im Wesentlichen nicht auf Reibungsdissipation, sondern einer Verstimmung von Eigenformen und -frequenzen durch Stöße der Impulskörper basiert. Zu weiteren Details dieses Konzepts zur Verstimmung wird ergänzend auf die WO 2012/095067 A1 Bezug und deren Inhalt ausdrücklich in die vorliegende Offenbarung aufgenommen.

Eine Aufgabe einer Ausführung der vorliegenden Erfindung ist es, das Betriebs-, insbesondere Schwingungsverhalten einer Turbomaschine, insbesondere einer Gasturbine, zu verbessern.

Diese Aufgabe wird durch ein Leitschaufelsegment mit den Merkmalen des Anspruchs 1 gelöst. Ansprüche 12, 13 stellt eine Turbomaschinenstufe, insbesondere eine Verdichter- oder Turbinenstufe, mit einem oder mehreren hier beschriebenen Leitschaufelsegmenten bzw. eine Turbomaschine, insbesondere eine Gasturbine, insbesondere eine Flugtriebwerk-Gasturbine, mit einer oder mehreren solchen Turbomaschinenstufen unter Schutz. Vorteilhafte Ausführungsformen der Erfindung sind Gegenstand der Unteransprüche.

Nach einer Ausführung der vorliegenden Erfindung weist ein(e) Leitschaufelsegment bzw. Leitschaufelbaugruppe, insbesondere Leitschaufelcluster, für eine Turbomaschinenstufe, insbesondere eine Verdichter- oder Turbinenstufe, einer Turbomaschine, insbesondere Gasturbine, insbesondere Flugtriebwerk-Gasturbine, insbesondere wenigstens ein Leitschaufelsegment wenigstens einer Turbomaschinenstufe, insbesondere Verdichter- oder Turbinenstufen, für eine bzw. einer Turbomaschine, insbesondere Gasturbine, insbesondere Flugtriebwerk-Gasturbine, ein Innenringsegment und mehrere Leitschaufeln, insbesondere Leitschaufelblätter und/oder zur Strömungsumlenkung und/oder Umsetzung von kinetischer in Druckenergie, auf, die an diesem Innenringsegment angeordnet sind.

In einer Ausführung ist das Innenringsegment radial innen von den Leitschaufeln des Leitschaufelsegments angeordnet und/oder mit diesen integral ausgebildet oder zerstörungsfrei lösbar oder nicht-zerstörungsfrei-lösbar verbunden.

In einer Ausführung sind ein oder mehrere hier beschriebene und/oder ein oder mehrere weitere Leitschaufelsegmente in Umfangsrichtung nebeneinander angeordnet und bilden ein Leitgitter, insbesondere ein Vor- und/oder Nachleitgitter, der Turbomaschine(nstufe) bzw. sind hierzu vorgesehen bzw. eingerichtet.

In einer Ausführung sind die Innenringsegmente der in Umfangsrichtung nebeneinander angeordneten Leitschaufelsegmente gegeneinander, insbesondere mittels zerstörungsfrei lösbar oder nicht-zerstörungsfrei-lösbar befestigter Dichtbleche, abgedichtet und/oder begrenzen radial (innen) einen Strömungskanal der Turbomaschine(nstufe) bzw. sind hierzu eingerichtet, sie können insbesondere einen (segmentierten) Innenring des Leitgitters bilden bzw. hierzu eingerichtet sein.

Die Richtungsangabe "axial" bezieht sich vorliegend insbesondere auf eine Einbaulage des Leitschaufelsegments und/oder eine Richtung parallel zu einer Rotations- bzw. (Haupt)Maschinenachse der Turbomaschine(nstufe), die Richtungsangabe "radial" insbesondere auf eine Einbaulage des Leitschaufelsegments und/oder eine Richtung senkrecht zu einer bzw. der Rotations- bzw. (Haupt)Maschinenachse der Turbomaschine(nstufe), die Richtungsangabe "in Umfangsrichtung" insbesondere auf eine Einbaulage des Leitschaufelsegments und/oder eine Umlaufrichtung um eine bzw. die Rotations- bzw. (Haupt)Maschinenachse der Turbomaschine(nstufe) und/oder eine Richtung tangential zu einer (Haupt)Rotationsrichtung der Turbomaschine(nstufe), die Richtungsangabe "stromauf-/abwärtig" insbesondere auf eine Einbaulage und/oder Auslegung bzw. einen Normalbetrieb des Leitschaufelsegments.

Nach einer Ausführung der vorliegenden Erfindung erstreckt sich von einer stromabwärtigen bzw. Hinter- bzw. Austrittskante wenigstens einer Leitschaufel, insbesondere von wenigstens 50%, insbesondere wenigstens 75%, insbesondere wenigstens 90%, insbesondere 100%, der Leitschaufeln des Leitschaufelsegments, (jeweils) ein vorliegend als Verstimmungsbereich bezeichneter Bereich des Innenringsegments axial zu einer stromaufwärtigen bzw. Vorder- bzw. Eintrittskante der Leitschaufel hin über bzw. um höchstens 30%, insbesondere höchstens 15%, einer (axialen, insbesondere maximalen) Breite des Innenringsegments, und optional in Umfangsrichtung beidseitig über bzw. um jeweils höchstens 25%, insbesondere höchstens 10%, insbesondere höchstens 5%, eines (insbesondere maximalen oder minimalen) Abstands (in Umfangsrichtung) benachbarter Leitschaufeln, insbesondere zwischen der (jeweiligen) Austrittskante und einer ihr, insbesondere in Umfangsrichtung unmittelbar, benachbarten Austrittskante bzw. Leitschaufel, an und/oder in dem (jeweils) ein oder mehrere Hohlräume angeordnet sind, in dem bzw. denen ein oder mehrere Impulskörper mit Bewegungsspiel zum Stoßkontakt angeordnet sind.

In einer Ausführung sind der bzw. die Impulskörper zum Stoßkontakt vorgesehen bzw. führen im Betrieb Stoßkontakte mit dem (jeweiligen) Hohlraum bzw. dessen Wänden aus bzw. sind hierzu bzw. derart ausgebildet. Unter einem Stoßkontakt wird vorliegend insbesondere in fachüblicher Weise ein kurzzeitiger bzw. impulsartiger, insbesondere wenigstens im Wesentlichen vollständig elastischer, und/oder stochastischer bzw. regelloser Kontakt verstanden. Ergänzend wird hierzu auf die WO 2012/095067 A1 Bezug genommen.

Es hat sich überraschend herausgestellt, dass durch die Anordnung von (Hohlräumen mit) Impulskörpern in der Nähe der Austrittskanten einer oder mehrerer Leitschaufeln, insbesondere der, vorzugsweise großen, Mehrheit der, insbesondere aller, Leitschaufeln des Leitschaufelsegments, in axialer und/oder Umfangsrichtung insbesondere Schaufel(blatt)moden dieser Leitschaufeln (sogenannte "Airfoilmoden") besonders wirksam verstimmt bzw. reduziert werden können.

In einer Ausführung erstreckt sich ein Verstimmungsbereich, der sich in Umfangsrichtung beidseitig über bzw. um jeweils höchstens 25%, insbesondere höchstens 10%, insbesondere höchstens 5%, eines Abstands benachbarter Leitschaufeln erstreckt, somit insgesamt in Umfangsrichtung über bzw. um jeweils höchstens 50%, insbesondere höchstens 20%, insbesondere höchstens 10%, des Abstands.

In einer Ausführung sind wenigstens 75%, insbesondere wenigstens 90%, insbesondere 100%, aller an und/oder in dem Innenringsegment angeordneten Impulskörper an und/oder in diesem bzw. diesen Verstimmungsbereich(en) angeordnet.

Es hat sich überraschend herausgestellt, dass durch diese Konzentration der Impulskörper in der Nähe der Austrittskanten insbesondere Airfoilmoden besonders wirksam verstimmt bzw. reduziert werden können.

In einer Ausführung sind der bzw. einer oder mehrere der Impulskörper (jeweils) kugelförmig ausgebildet und/oder aus Metall, Al₂O₃ und/oder aus CrO₂ hergestellt.

Hierdurch kann ein vorteilhafter Stoßkontakt realisiert werden.

In einer Ausführung ist in dem bzw. einem oder mehreren der Hohlräume (jeweils) genau ein Impulskörper angeordnet.

Hierdurch können vorteilhafte Einzelstoßkontakte realisiert werden.

Rein theoretisch ist es auch denkbar, zusätzlich oder alternativ in einer Ausführung in dem bzw. einem oder mehreren der Hohlräume (jeweils) zwei oder mehr Impulskörper anzuordnen.

Hierdurch können auch Stoßkontakte zwischen Impulskörpern realisiert werden.

In einer Ausführung sind der bzw. einer oder mehrere der Impulskörper (jeweils) ungefesselt bzw. frei beweglich in einem Hohlraum angeordnet, der in einer Weiterbildung luftgefüllt sein kann.

Hierdurch kann ein vorteilhafter Stoßkontakt realisiert werden.

In einer Ausführung sind der bzw. einer oder mehrere der Hohlräume (jeweils) in einem oder mehreren (von dem Innenringsegment) separat hergestellten Gehäusen angeordnet.

Dabei können in einer Weiterbildung ein oder mehrere Gehäuse (jeweils) ein oder mehrere, wenigstens teilweise mit Impulskörpern bestückte, Hohlräume aufweisen und/oder zerstörungsfrei lösbar oder nicht-zerstörungsfrei-lösbar an bzw. in dem Innenringsegment bzw. dessen Verstimmungsbereich(en) befestigt sein, insbesondere auf einer leitschaufelabgewandten Seite. Zusätzlich oder alternativ können in einer Weiterbildung ein oder mehrere, wenigstens teilweise mit Impulskörpern bestückte, Hohlräume eines oder mehrerer der Gehäuse (jeweils), insbesondere mittels eines, insbesondere gemeinsamen, Deckels, luftdicht (verschlossen) sein.

In einer Ausführung ist die Gesamtzahl n_{G} aller an bzw. in dem Innenringsegment angeordneten, mit Impulskörpern bestückten Gehäuse kleiner oder gleich der Anzahl n_{S} der Leitschaufeln, insbesondere um eins kleiner als die Anzahl der Leitschaufeln (n_{G} ≤ n_{S}, insbesondere n_{G} = n_{S} - 1).

Es hat sich überraschend herausgestellt, dass durch diese Abstimmung von Impulskörpergehäuse- und Leitschaufelanzahl aufeinander insbesondere Airfoilmoden besonders wirksam verstimmt bzw. reduziert werden können.

In einer Ausführung weisen der bzw. ein oder mehrere der Impulskörper (jeweils) eine Masse auf, die wenigstens 0,01 Gramm (g), insbesondere wenigstens 0,02 g, und/oder höchstens 0,05 g, insbesondere höchstens 0,03 g, beträgt.

Zusätzlich oder alternativ weisen in einer Ausführung der bzw. ein oder mehrere der Impulskörper (jeweils) einen, insbesondere minimalen oder maximalen, Durchmesser auf, der wenigstens 1 mm und/oder höchstens 5 mm beträgt, insbesondere bei 20°C.

Zusätzlich oder alternativ beträgt in einer Ausführung das Bewegungsspiel des bzw. eines oder mehrerer der Impulskörper(s jeweils) wenigstens 0,01 mm, insbesondere wenigstens 0,1 mm, eines minimalen Durchmessers dieses Impulskörpers und/oder höchstens 10 mm, insbesondere höchstens 1 mm, eines maximalen Durchmessers dieses Impulskörpers, insbesondere bei 20°C.

Es hat sich überraschend herausgestellt, dass durch diese Parameter bzw. Grenzwerte jeweils bereits einzeln, insbesondere aber in Kombination von zwei oder mehr dieser Parameter bzw. Grenzwerte, eine besonders vorteilhafte Verstimmung bzw. Reduzierung von Airfoilmoden bewirkt werden kann.

In einer Ausführung sind bzw. werden der bzw. einer oder mehrere der Impulskörper zur Verstimmung von Airfoilmoden des Leitschaufelsegments ausgelegt bzw. verwendet, insbesondere durch eine oder mehrere der vorliegend erläuterten Parameter und/oder experimentell oder mittels Simulation.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1:: ein Leitgittersegment einer Turbomaschine nach einer Ausführung der vorliegenden Erfindung in einer axialen Rückansicht; und
- Fig. 2:: das Leitgittersegment in einer Seitansicht in Umfangsrichtung.

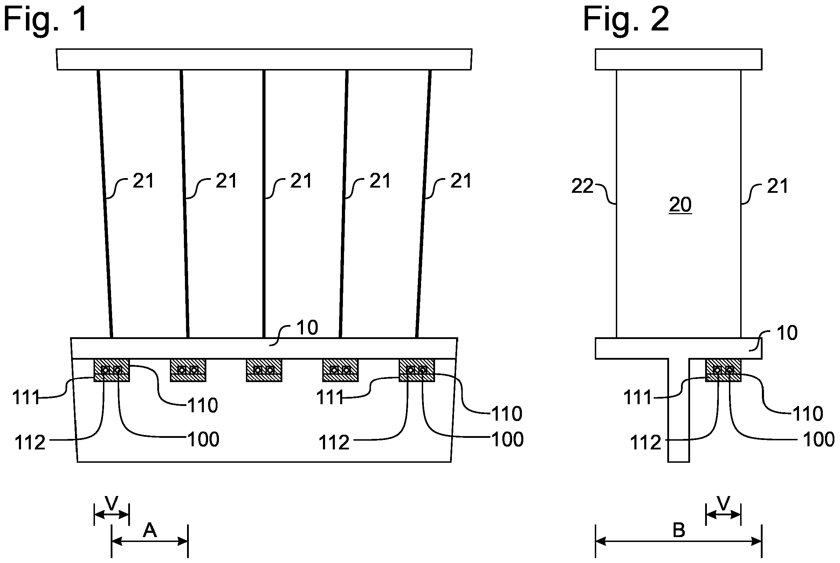

Fig. 1 zeigt ein Leitgittersegment einer Turbomaschine nach einer Ausführung der vorliegenden Erfindung in einer axialen Rückansicht entgegen einer (Auslegungs)Durchströmungsrichtung, Fig. 2 in einer Seitansicht in Umfangsrichtung.

Das Leitschaufelsegment weist ein Innenringsegment 10 und mehrere Leitschaufeln 20 mit stromabwärtigen (rechts in Fig. 2) Austritts- bzw. Hinterkanten 21 auf, die integral mit dem Innenringsegment 10 ausgebildet sind.

Von den fünf Austrittskanten 21 erstreckt sich jeweils ein Verstimmungsbereich V des Innenringsegments 10 axial zu einer Eintrittskante 22 der jeweiligen Leitschaufel 20 hin (nach links in Fig. 2) über bzw. um höchstens 50% einer Breite B des Innenringsegments 10 und/oder höchstens 5 mm und in Umfangsrichtung (vgl. Fig. 1) beidseitig jeweils über bzw. um höchstens 25% eines Abstands A benachbarter Leitschaufel(austrittskante)n (so dass seine Gesamterstreckung in Umfangsrichtung höchstens 50% des Abstands A beträgt), an dem jeweils ein separat hergestelltes Gehäuse 110 mit mehreren luftgefüllten Hohlräumen 112 befestigt ist, in denen jeweils ungefesselt ein kugelförmiger Impulskörper 100 mit Bewegungsspiel zum Stoßkontakt angeordnet ist, und die durch einen gemeinsamen Deckel 111 luftdicht verschlossen sind.

Obwohl in der vorhergehenden Beschreibung exemplarische Ausführungen erläutert wurden, sei darauf hingewiesen, dass eine Vielzahl von Abwandlungen möglich ist.

So erstreckt sich in einer nicht dargestellten Abwandlung von einer in Umfangsrichtung äußersten Austrittskanten 21 (links oder rechts in Fig. 1) kein mit Impulskörpern 110 bestückte Hohlräume 112 aufweisender Verstimmungsbereich V.

Gleichermaßen können in einer Abwandlung Hohlräume 112 auch direkt in dem Innenringsegment 10 ausgebildet bzw. Impulskörper 100 ohne separat hergestellte Gehäuse 110 unmittelbar in dem Innenringsegment 10 angeordnet sein.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: Innenringsegment
- 20: Leitschaufel
- 21: Austrittskante
- 22: Eintrittskante
- 100: Impulskörper
- 110: Gehäuse
- 111: Deckel
- 112: Hohlraum
- A: Abstand
- B: Breite
- V: Verstimmungsbereich

## Patentansprüche

1. Leitschaufelsegment für eine Turbomaschinenstufe, das ein Innenringsegment (10) und mehrere Leitschaufeln (20) aufweist, die an dem Innenringsegment angeordnet sind;
**dadurch gekennzeichnet, dass** sich von einer Austrittskante (21) wenigstens einer Leitschaufel (20), insbesondere von wenigstens 50% der Leitschaufeln (50) jeweils, ein Verstimmungsbereich (V) des Innenringsegments axial zu einer Eintrittskante (22) der Leitschaufel (20) hin über höchstens 30% einer axialen Breite (B) des Innenringsegments (10) erstreckt, an und/oder in dem wenigstens ein Hohlraum (112) angeordnet ist, in dem wenigstens ein Impulskörper (100) mit Bewegungsspiel zum Stoßkontakt angeordnet ist.

2. Leitschaufelsegment nach dem vorhergehenden Anspruch, **dadurch gekennzeichnet, dass** wenigstens 75% aller an und/oder in dem Innenringsegment (10) angeordneten Impulskörper (100) in dem bzw. den Verstimmungsbereichen (V) angeordnet sind.

3. Leitschaufelsegment nach einem der vorhergehenden Ansprüche, **dadurch gekennzeichnet, dass** wenigstens ein Impulskörper (100) kugelförmig ausgebildet ist.

4. Leitschaufelsegment nach einem der vorhergehenden Ansprüche, **dadurch gekennzeichnet, dass** in wenigstens einem Hohlraum (112) genau ein Impulskörper (100) oder wenigstens zwei Impulskörper (100) angeordnet sind.

5. Leitschaufelsegment nach einem der vorhergehenden Ansprüche, **dadurch gekennzeichnet, dass** wenigstens ein Impulskörper (100) ungefesselt in einem Hohlraum (112) angeordnet ist.

6. Leitschaufelsegment nach einem der vorhergehenden Ansprüche, **dadurch gekennzeichnet, dass** wenigstens ein, insbesondere luftdichter, Hohlraum (112) in einem separat hergestellten Gehäuse (110) angeordnet ist.

7. Leitschaufelsegment nach dem vorhergehenden Anspruch, **dadurch gekennzeichnet, dass** die Gesamtzahl aller Gehäuse (110) kleiner oder gleich der Anzahl der Leitschaufeln (20), insbesondere um eins kleiner als die Anzahl der Leitschaufeln (20), ist.

8. Leitschaufelsegment nach einem der vorhergehenden Ansprüche, **dadurch gekennzeichnet, dass** wenigstens ein Impulskörper (100) eine Masse aufweist, die wenigstens 0,01 g und/oder höchstens 0,05 g beträgt.

9. Leitschaufelsegment nach einem der vorhergehenden Ansprüche, **dadurch gekennzeichnet, dass** wenigstens ein Impulskörper (100) einen Durchmesser aufweist, der wenigstens 1 mm und/oder höchstens 5 mm beträgt.

10. Leitschaufelsegment nach einem der vorhergehenden Ansprüche, **dadurch gekennzeichnet, dass** das Bewegungsspiel wenigstens eines Impulskörpers (100) wenigstens 0,01 mm eines minimalen Durchmessers des Impulskörpers und/oder höchstens 10 mm eines maximalen Durchmessers des Impulskörpers beträgt.

11. Leitschaufelsegment nach einem der vorhergehenden Ansprüche, **dadurch gekennzeichnet, dass** wenigstens ein Impulskörper (100) zur Verstimmung von Airfoilmoden des Leitschaufelsegments ausgelegt ist.

12. Turbomaschinenstufe, insbesondere Verdichter- oder Turbinenstufe, mit wenigstens einem Leitschaufelsegment nach einem der vorhergehenden Ansprüche.

13. Turbomaschine, insbesondere Gasturbine, insbesondere Flugtriebwerk-Gasturbine, mit wenigstens einer Turbomaschinenstufe nach dem vorhergehenden Anspruch.

## Claims

1. Guide vane segment for a turbomachine stage, which guide vane segment has an inner ring segment (10) and a plurality of guide vanes (20) which are arranged on the inner ring segment;
**characterized in that** a detuning region (V) of the inner ring segment extends from a trailing edge (21) of at least one guide vane (20), in particular of at least 50% of the guide vanes (50), axially towards a leading edge (22) of the guide vane (20) over at most 30% of an axial width (B) of the inner ring segment (10), on and/or in which region at least one cavity (112) is arranged in which at least one impulse body (100) having clearance of motion for impact contact is arranged.

2. Guide vane segment according to the preceding claim,
**characterized in that** at least 75% of all of the impulse bodies (100) arranged on and/or in the inner ring segment (10) are arranged in the detuning region(s) (V).

3. Guide vane segment according to either of the preceding claims, **characterized in that** at least one impulse body (100) is spherical.

4. Guide vane segment according to any of the preceding claims, **characterized in that** exactly one impulse body (100) or at least two impulse bodies (100) is/are arranged in at least one cavity (112).

5. Guide vane segment according to any of the preceding claims, **characterized in that** at least one impulse body (100) is arranged in a cavity (112) without being restrained.

6. Guide vane segment according to any of the preceding claims, **characterized in that** at least one, in particular airtight, cavity (112) is arranged in a separately produced housing (110).

7. Guide vane segment according to the preceding claim,
**characterized in that** the total number of all housings (110) is less than or equal to the number of guide vanes (20), in particular one less than the number of guide vanes (20).

8. Guide vane segment according to any of the preceding claims, **characterized in that** at least one impulse body (100) has a mass that is at least 0.01 g and/or at most 0.05 g.

9. Guide vane segment according to any of the preceding claims, **characterized in that** at least one impulse body (100) has a diameter which is at least 1 mm and/or at most 5 mm.

10. Guide vane segment according to any of the preceding claims, **characterized in that** the clearance of motion of at least one impulse body (100) is at least 0.01 mm of a minimum diameter of the impulse body and/or at most 10 mm of a maximum diameter of the impulse body.

11. Guide vane segment according to any of the preceding claims, **characterized in that** at least one impulse body (100) is designed for detuning airfoil modes of the guide vane segment.

12. Turbomachine stage, in particular a compressor stage or turbine stage, comprising at least one guide vane segment according to any of the preceding claims.

13. Turbomachine, in particular a gas turbine, in particular an aircraft engine gas turbine, comprising at least one turbomachine stage according to the preceding claim.

## Revendications

1. Segment d'aube directrice pour un étage de turbomachine, lequel segment présente un segment d'anneau intérieur (10) et plusieurs aubes directrices (20) disposées sur le segment d'anneau intérieur ;
**caractérisé en ce que**, depuis un bord de fuite (21) d'au moins une aube directrice (20), en particulier d'au moins 50 % des aubes directrices (50), respectivement une zone de désaccord (V) du segment d'anneau intérieur s'étend, axialement par rapport à un bord d'attaque (22) de l'aube directrice (20), sur au plus 30 % d'une largeur axiale (B) du segment d'anneau intérieur (10), sur et/ou dans laquelle zone de désaccord est disposée au moins une cavité (112) dans laquelle est disposé au moins un corps d'impulsions (100) comportant un jeu de mouvement pour le contact lors d'un choc.

2. Segment d'aube directrice selon la revendication précédente, **caractérisé en ce qu'**au moins 75 % de tous les corps d'impulsions (100) disposés sur et/ou dans le segment d'anneau intérieur (10) sont disposés dans la ou les zones de désaccord (V).

3. Segment d'aube directrice selon l'une quelconque des revendications précédentes, **caractérisé en ce qu'**au moins un corps d'impulsions (100) est de forme sphérique.

4. Segment d'aube directrice selon l'une quelconque des revendications précédentes, **caractérisé en ce qu'**exactement un corps d'impulsions (100) ou au moins deux corps d'impulsions (100) sont disposés dans au moins une cavité (112).

5. Segment d'aube directrice selon l'une quelconque des revendications précédentes, **caractérisé en ce qu'**au moins un corps d'impulsions (100) est disposé sans être attaché dans une cavité (112).

6. Segment d'aube directrice selon l'une quelconque des revendications précédentes, **caractérisé en ce qu'**au moins une cavité (112), en particulier étanche à l'air, est disposée dans un boîtier (110) fabriqué séparément.

7. Segment d'aube directrice selon la revendication précédente, **caractérisé en ce que** le nombre total de tous les boîtiers (110) est inférieur ou égal au nombre d'aubes directrices (20), en particulier inférieur au nombre d'aubes directrices (20) d'un.

8. Segment d'aube directrice selon l'une quelconque des revendications précédentes, **caractérisé en ce qu'**au moins un corps d'impulsions (100) présente une masse qui est d'au moins 0,01 g et/ou d'au plus 0,05 g.

9. Segment d'aube directrice selon l'une quelconque des revendications précédentes, **caractérisé en ce qu'**au moins un corps d'impulsions (100) présente un diamètre qui est d'au moins 1 mm et/ou d'au plus 5 mm.

10. Segment d'aube directrice selon l'une quelconque des revendications précédentes, **caractérisé en ce que** le jeu de mouvement d'au moins un corps d'impulsions (100) est d'au moins 0,01 mm d'un diamètre minimal du corps d'impulsions et/ou d'au plus 10 mm d'un diamètre maximal du corps d'impulsions.

11. Segment d'aube directrice selon l'une quelconque des revendications précédentes, **caractérisé en ce qu'**au moins un corps d'impulsions (100) est conçu pour le désaccord de profils aérodynamiques du segment d'aube directrice.

12. Étage de turbomachine, en particulier étage de compresseur ou de turbine, comportant au moins un segment d'aube directrice selon l'une quelconque des revendications précédentes.

13. Turbomachine, en particulier turbine à gaz, en particulier turbine à gaz de moteur d'aéronef, comportant au moins un étage de turbomachine selon la revendication précédente.
